# EUROPEAN PATENT SPECIFICATION

(11) **EP 2 246 263 B1**
(45) Date of publication and mention of the grant of the patent: **14.12.2016**
(21) Application number: 09382060.3
(22) Date of filing: 30.04.2009
(51) Int. Cl.: B65B 9/20, B65B 51/26, B65B 61/00, B65B 61/28

(54) **Machine and method for manufacturing containers**
Maschine und Verfahren zur Herstellung von Behältern
Machine et procédé de fabrication de conteneurs

(43) Date of publication of application: 03.11.2010
(73) Proprietor: Aranow Packaging Machinery, S.L., 08181 Sentmenat (ES)
(72) Inventor: Cuixart Navarro, Jordi, 08181 Sentmenat (ES)
(74) Representative: Oficina Ponti, SLP

(56) References cited:
- EP-A1- 1 661 811
- WO-A-2005/025993
- DE-A1- 2 519 775
- DE-A1- 10 020 324
- GB-A- 712 485
- JP-A- 2007 152 657
- US-A- 3 092 248
- US-A- 5 412 927
- US-A1- 2006 137 298

## Description

The present invention refers to a machine and to a method for manufacturing containers, particularly containers of "stickpack" kind, i.e. single-dose envelope containers.

### BACKGROUND OF THE INVENTION

The single-dose envelope containers known as "stickpack" are formed from a sheet, whose ends are longitudinally joined forming a welding flange.

Currently, the "stickpack" containers have this welding flange in the centre of the width of the container.

The fact that this welding flange is centrally placed with respect to the width of the container causes a drawback.

This drawback is that it is not possible to handle perfectly the container when it is opened to extract the product inside the container. This is because the exit hole of the product is placed on the same centre of the width of the container. Therefore, the exit hole of the product and the welding flange match up, making the exit of the product difficult.

E.g. EP-A-1 464 587 discloses a "stickpack" container and a method for its manufacturing. As it can be seen in the drawings, the welding flange in this container is placed in a centred position with respect to the width of the container. Therefore, to make the opening of the container easier, it comprises transversal weakening cuts in at least one of the flaps which form said welding flange.

US 2006/0137298 discloses a method and system for manufacturing a package include: a package-joining belt forming step for forming a package-joining belt in which package each containing a material filled in between superposed films and each sealed by joint portions and a side edge portion are joined with each other by the joint portions, the package-joining belt forming step including: a superposing process of forming superposed films; a joint potion forming process of forming band-shaped joint portions; a side edge portion forming process of forming band-shaped side edge portion; and a filling process of filling the material; and a scar forming step for forming plural elongate scars each extending adjacent and substantially perpendicularly to the side edge in the side edge portion, wherein the package-joining belt forming step and the scar forming step are carried out, white the package-joining belt is drown.

GB 712,485 discloses a method of producing a series of charged and sealed capsules with the aid of intermittently downwardly fed opposed lengths of thermoplastic web or strip material comprises forming each of successive capsules by first joining the opposed webs to form a sac, then charging the sac through the open top thereof and following displacement of the webs, sealing the sac to close the capsule, the said joining and sealing being effected by di-electric heating, the welding members being U-shaped electrodes across which the high frequency power is applied, the electrodes sealing the last formed sac has they form the sac of the next capsule along the webs.

It must be pointed out that the "stickpack" containers are manufactured individually, i.e. once they are vertically and horizontally welded, each container is cut in a cutting station, without the possibility of obtaining a string of containers joined to each other, but with the possibility for separating them manually and easily.

Therefore, a first object of the present invention is to provide a machine and a method that permit to obtain a "stickpack" container in which the longitudinal welding flange does not interferes with the opening of the container.

A second object of the present invention is to provide a machine and a method that permit to manufacture, if wished, strings of "stickpack" containers joined to each other, these containers having, if wished, a particular shape.

### DESCRIPTION OF THE INVENTION

With the machine and the method of the invention said drawbacks can be solved, presenting other advantages that will be described.

According to a first aspect, the machine for manufacturing containers of the present invention comprises:
- a welding station, comprising longitudinal welding means, which longitudinally welds a longitudinal welding flange, and transversal welding means, which transversally welds the division between the containers; and
- a cutting station;
   said transversal welding means welding the division between the containers so that said longitudinal welding flange is placed at or near an end of said division between the containers.

Thanks to this feature, the placement of the welding flange does not affect to the opening of the container, so that all the contents of the container can be extracted comfortably.

According to a preferred embodiment, said longitudinal welding means comprises a forming tube, around which a sheet that will form the containers is placed, a forming body provided with a groove for accessing to the forming tube and a longitudinal welder provided with a curved contact surface complementary with said forming tube.

The machine of the present invention also comprises dragging means of the containers joined to each other, said dragging means being preferably pliers that hold the joined containers.

Furthermore, in the machine of the present invention said dragging means are connected preferably with a pass or presence detector of the containers.

The machine of the present invention also preferably comprises braking means of the containers, which hold the containers when said dragging means release said containers, and it also comprises centring means that are connected with said dragging means, so that when the centring means detect the presence of each container, it sends a signal to the dragging means to centre each container.

To provide to each container a specific shape, the machine preferably also comprises a punching station, upstream said cutting station, which punches a shape and incisions in each container.

Advantageously, the machine of the present invention also comprises a removing station placed downstream said cutting station, for the removal of the containers individually or by strings.

According to the second aspect, the method for manufacturing containers of the present invention comprises the steps of:
- providing a sheet for its longitudinal and transversal welding, forming a plurality of containers, defining a longitudinal welding flange and a transversal division between each container;
   the transversal division between each container being welded so that the longitudinal welding is placed in or near an end of said transversal division.

The method of the present invention also comprises a punching step of a shape or incisions in the division between each container, and it also comprises the steps of detecting the presence of said containers and dragging said containers from said detection.

The method of the present invention also comprises a centring step of said containers during said dragging for the correct punching of the shape and/or incisions, and preferably a braking and holding step of the containers when said containers are released after its dragging.

### BRIEF DESCRIPTION OF THE DRAWINGS

For a better understanding of what has been described, some drawings are attached in which, diagrammatically and only as a non-limitative example, a practical case of embodiment is shown.
Fig. 1 is a diagrammatical perspective view of the welding station of the machine of the present invention;
Fig. 2 is a diagrammatical perspective view of the rest of stations of the machine of the present invention.

### DESCRIPTION OF A PREFERRED EMBODIMENT

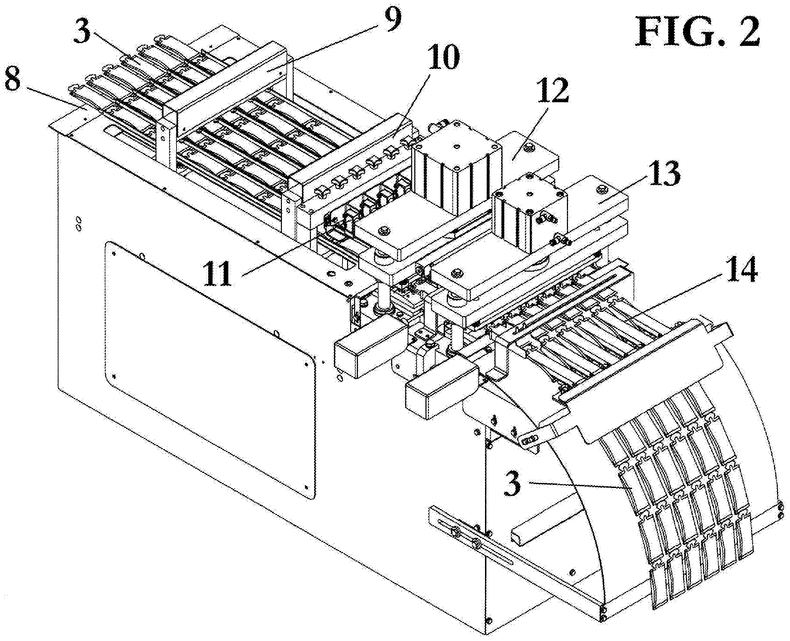

Firstly, it must be pointed out that in the present description and in the claims reference is made to a single manufacturing line of containers for simplicity reasons. However, it is apparent that the machine of the present invention comprises a plurality of manufacturing lines, as it can be seen in Fig. 2, in which a machine with six manufacturing lines is shown.

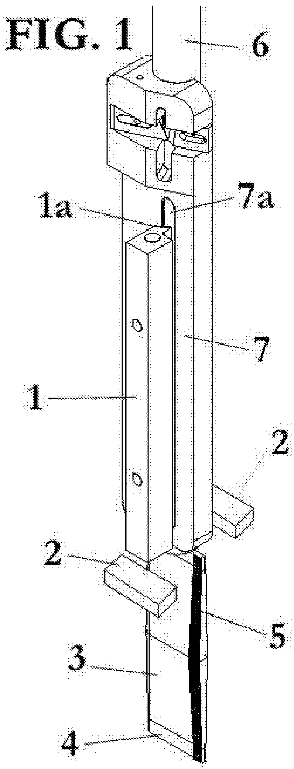

As it can be seen in Fig. 1, firstly the machine of the present invention comprises a welding station.

This welding station comprises a longitudinal or vertical welder 1 and transversal or horizontal welders 2.

In this welding station the containers 3 are formed continuously, welding a transversal division 4 and a longitudinal welding flange 5.

Therefore, from a reel (not shown in the figures) a sheet of a suitable material is provided for the formation of "stickpack" containers, which is placed around a forming tube 6.

Firstly, this sheet is longitudinally welded (or vertically as shown in Fig. 1) by the longitudinal welder 1, forming said welding flange 5.

Said longitudinal welding is done through a groove 7a provided in a forming body 7. To obtain the correct welding, the longitudinal welder 1 presents a curved surface 1a for contacting with the forming tube 6. Said longitudinal welder is movable between a removed position and a welding position, in which it is in contact with said forming tube 6 with the placing of said sheet, forming the welding flange 5.

Then, the transversal welders 2 form said division 4 of the containers. Said transversal welders 2 are also movable between a retired position (shown in Fig. 1) and a welding position, in which both transversal welders 2 are in contact to each other with the placing of said sheet, forming the transversal division 4.

Once a plurality of containers 3 joined to each other by said divisions 4 forming a string are formed, these containers 3 are placed on the part of the machine of the present invention shown in Fig. 2.

Firstly, this part of the machine comprises a presence detector 8 to control the synchronism of the containers 3.

Then, the machine of the present invention comprises two kinds of pliers, braking or holding pliers 9 and dragging pliers 10.

The end of the dragging pliers 10 is to control the length of each container 3, so that when the presence detector 8 does not detect the presence of the string of containers 3, it sends a signal to the dragging pliers 10, reducing the advancement speed of the string and more string is accumulated.

The braking or holding pliers 9 control the holding of the string at the entrance of the part of the machine shown in Fig. 2. These pliers 9 are driven when the dragging pliers 10 have ended the dragging process and the dragging pliers 10 do not hold the string of containers 3.

As the string of containers 3 cannot be left free, the braking pliers 9 are operated, holding the string, so that the string cannot be moved, guaranteeing its position.

The machine of the present invention also comprises a centring photoelectric cell 11. By a mark or dot placed in each container, the photoelectric cell 11 detects the moment when the mark or dot of the container passes.

In the moment when the photoelectric cell 11 detects the mark or dot, it sends a signal to the dragging pliers 10, which stop exactly at the centre of each stated the string of containers 3. The position of this mark or dot is determined according to the length of each unitary container 3.

Above there are defined the components of the machine which permit to hold, drag and detect the string of containers 3 for their correct positioning at the stations which are described hereinafter.

The machine of the present invention comprises a punching station 12, a cutting station 13 and a removing station 14.

The punching station 12 comprises a die that punches in each container 3 a predetermined shape and also incisions, which serve to make the removal of the container 3 easier at the removing station 14.

The cutting station 13 comprises a cutting die, which cuts individually each container 3 or, preferably, strings of containers 3 according to the manufacturing needs.

Finally, the individual containers or the strings of containers are removed from the machine by a removing station 14.

Even though reference is made to a specific embodiment of the invention, it is apparent for a person skilled in the art that the described machine and method are susceptible of numerous variations and modifications, and that all the details mentioned can be substituted by other technically equivalent ones, without departing from the scope of protection defined by the attached claims.

## Claims

1. Machine for the manufacturing of containers, comprising:
- a welding station, comprising longitudinal welding means (1), which longitudinally welds a longitudinal welding flange (5), and transversal welding means (2), which transversally welds the division (4) between the containers (3); and
- a cutting station (13);
said transversal welding means (2) welding the division between the containers so that said longitudinal welding flange (5) is placed at or near an end of said division (4) between the containers (3),
which also comprises dragging means (10) of the containers (3) joined to each other,
**characterised in that** it also comprises centring means (11) that are connected with said dragging means (10), so that when the centring means (11) detect the presence of each container (3), it sends a signal to the dragging means (10) to centre each container (3).

2. Machine according to claim 1, wherein said longitudinal welding means comprises a forming tube (6), around which a sheet that will form the containers (3) is placed, a forming body (7) provided with a groove (7a) for accessing to the forming tube (6) and a longitudinal welder (1) provided with a curved contact surface (1a) complementary with said forming tube (6).

3. Machine according to claim 1, wherein said dragging means are pliers (10) that hold the joined containers (3).

4. Machine according to claim 1, wherein said dragging means (10) are connected with a pass or presence detector (8) of the containers (3).

5. Machine according to claim 1, which also comprises braking means (9) of the containers (3), which hold the containers (3) when said dragging means (10) release said containers (3).

6. Machine according to claim 1, which also comprises a punching station (12), upstream said cutting station (13), which punches a shape and incisions in each container (3).

7. Machine according to claim 1, which also comprises a removing station (14) placed downstream said cutting station (13), for the removal of the containers (3) individually or by strings.

8. Method for manufacturing containers (3), comprising the steps of:
- providing a sheet for its longitudinal and transversal welding, forming a plurality of containers (3), defining a longitudinal welding flange (5) and a transversal division (4) between each container (3);
the transversal division (4) between each container (3) being welded so that the longitudinal welding (5) is placed in or near an end of said transversal division (4),
also comprising a punching step of a shape or incisions in the division between each container (3), and
the steps of:
- detecting the presence of said containers (3); and
- dragging said containers (3) from said detection;
**characterised in that** it also comprises a centring step of said containers (3) during said dragging for the correct punching of the shape and/or incisions.

9. Method according to claim 8, which comprises a braking and holding step of the containers (3) when said containers are released after its dragging.

## Patentansprüche

1. Maschine zur Herstellung von Behältern, die folgende Merkmale aufweist:
eine Schweißstation, die eine Längsschweißeinrichtung (1), die einen Längsschweißflansch (5) der Länge nach schweißt, und eine Querschweißeinrichtung (2), die die Unterteilung (4) zwischen den Behältern (3) quer schweißt, aufweist; und
eine Schneidestation (13);
wobei die Querschweißeinrichtung (2) die Unterteilung zwischen den Behältern so schweißt, dass der Längsschweißflansch (5) an einem Ende oder in der Nähe eines Endes der Unterteilung (4) zwischen den Behältern (3) platziert wird,
die auch eine Zieheinrichtung (10) der miteinander verbundenen Behälter (3) aufweist,
**dadurch gekennzeichnet, dass** sie ferner eine Zentrierungseinrichtung (11) aufweist, die mit der Zieheinrichtung (10) verbunden ist, so dass dann, wenn die Zentrierungseinrichtung (11) das Vorhandensein jedes Behälters (3) erfasst, sie ein Signal an die Zieheinrichtung (10) dahin gehend sendet, jeden Behälter (3) zu zentrieren.

2. Maschine gemäß Anspruch 1, bei der die Längsschweißeinrichtung ein Formungsrohr (6), um das herum eine Platte, die die Behälter (3) formen wird, platziert ist, einen Formungskörper (7), der mit einer Rille (7a) zum Eingreifen in das Formungsrohr (6) versehen ist, und einen Längsschweißer (1) aufweist, der mit einer gekrümmten Kontaktoberfläche (1a), die zu dem Formungsrohr (6) komplementär ist, versehen ist.

3. Maschine gemäß Anspruch 1, bei der die Zieheinrichtung eine Zange (10) ist, die die verbundenen Behälter (3) hält.

4. Maschine gemäß Anspruch 1, bei der die Zieheinrichtung (10) mit einem Durchlauf- oder Präsenzmelder (8) der Behälter (3) verbunden ist.

5. Maschine gemäß Anspruch 1, die auch eine Bremseinrichtung (9) der Behälter (3) aufweist, die die Behälter (3) hält, wenn die Zieheinrichtung (10) die Behälter (3) freigibt.

6. Maschine gemäß Anspruch 1, die in Verarbeitungsrichtung vor der Schneidestation (13) auch eine Stanzstation (12) aufweist, die eine Gestalt und Einkerbungen in jeden Behälter (3) stanzt.

7. Maschine gemäß Anspruch 1, die auch eine in Verarbeitungsrichtung nach der Schneidestation (13) platzierte Entnahmestation (14) zur Entnahme der Behälter (3) einzeln oder als Stränge aufweist.

8. Verfahren zum Herstellen von Behältern (3), das folgende Schritte aufweist:
Bereitstellen einer Platte für ihre Längs- und Querschweißung, Formen einer Mehrzahl von Behältern (3), Definieren eines Längsschweißflansches (5) und einer Quer-unterteilung (4) zwischen jedem Behälter (3);
wobei die Querunterteilung (4) zwischen jedem Behälter (3) so geschweißt wird, dass die Längsschweißung (5) in einem Ende oder in der Nähe eines Endes der Querunterteilung (4) platziert wird,
einen Schritt eines Stanzens einer Gestalt oder von Einkerbungen in der Unterteilung zwischen jedem Behälter (3), und
die folgenden Schritte:
Erfassen des Vorhandenseins der Behälter (3); und
Ziehen der Behälter (3) aus dieser Erfassung;
**dadurch gekennzeichnet, dass** es auch einen Schritt eines Zentrierens der Behälter (3) während des Ziehens zum korrekten Stanzen der Gestalt und/oder der Einkerbungen aufweist.

9. Verfahren gemäß Anspruch 8, das einen Schritt eines Bremsens und Haltens der Behälter (3), wenn die Behälter nach ihrem Ziehen freigegeben werden, aufweist.

## Revendications

1. Machine destinée à la fabrication de conteneurs, comprenant :
- un poste de soudure, comprenant des moyens de soudure longitudinaux (1), qui soudent longitudinalement une bride de soudure longitudinale (5), et des moyens de soudure transversaux (2), qui soudent transversalement la séparation (4) entre les conteneurs (3) ; et
- une station de coupe (13) ;
lesdits moyens de soudure transversaux (2) soudant la séparation entre les conteneurs de telle sorte que la bride de soudure longitudinale (5) soit placée à ou près d'une extrémité de ladite séparation (4) entre les conteneurs (3).

2. Machine selon la revendication 1, dans laquelle lesdits moyens de soudure longitudinaux comprennent un tube de formage (6), autour duquel est placée une plaque qui formera les conteneurs (3), un corps de formage (7) pourvu d'une rainure (7a) pour accéder au tube de formage (6) et un soudeur longitudinal (1) pourvu d'une surface de contact incurvée (1a) complémentaire audit tube de formage (6),
comprenant en outre des moyens d'entraînement (10) des conteneurs (3) joints les uns aux autres.

3. Machine selon la revendication 1, dans laquelle lesdits moyens d'entraînement sont des pinces (10) qui maintiennent les conteneurs joints (3).

4. Machine selon la revendication 1, dans laquelle lesdits moyens d'entraînement (10) sont connectés à un détecteur de passage ou de présence (8) des conteneurs (3).

5. Machine selon la revendication 1, comprenant en outre des moyens de freinage (9) des conteneurs (3), qui tiennent les conteneurs (3) lorsque lesdits moyens d'entraînement (10) relâchent lesdits conteneurs (3)
**caractérisée en ce qu'**elle comprend en outre des moyens de centrage (11) qui sont connectés auxdits moyens d'entraînement (10), afin que lorsque les moyens de centrage (11) détectent la présence de chaque conteneur (3), ils envoient un signal aux moyens d'entraînement (10) afin de centrer chaque conteneur (3).

6. Machine selon la revendication 1, comprenant en outre une station de poinçonnage (12), en amont de ladite station de coupe (13), qui poinçonne une forme et des incisions dans chaque conteneur (3).

7. Machine selon la revendication 1, comprenant en outre une station de prélèvement (14), placée en aval de ladite station de coupe (13), pour retirer les conteneurs (3) individuellement ou par séries.

8. Procédé de fabrication de conteneurs (3), comprenant les étapes de :
- fournir une plaque pour sa soudure longitudinale et transversale, formant plusieurs conteneurs (3), définissant une bride de soudure longitudinale (5) et une séparation transversale (4) entre chaque conteneur (3) ;
la séparation transversale (4) entre chaque conteneur (3) est soudée de telle sorte que la soudure longitudinale (5) soit placée à ou près d'une extrémité de ladite séparation transversale (4),
comprenant en outre une étape de poinçonnage d'une forme ou d'incisions dans la séparation entre chaque conteneur (3) et les étapes de
- détection de la présence desdits conteneurs (3) ; et
- entraînement desdits conteneurs (3) de ladite détection ; **caractérisé en ce qu'**il comprend en outre une étape de centrage desdits conteneurs (3) pendant ledit entraînement pour un poinçonnage correct de la forme et/ou des incisions.

9. Procédé selon la revendication 8, comprenant une étape de freinage et de maintien des conteneurs (3) lorsque lesdits conteneurs sont relâchés après leur entraînement.
